# EUROPÄISCHE PATENTSCHRIFT

(11) **EP 3 526 647 B1**
(45) Veröffentlichungstag und Bekanntmachung des Hinweises auf die Patenterteilung: **17.07.2024**
(21) Anmeldenummer: 17793844.6
(22) Anmeldetag: 10.10.2017
(51) Int. Cl.: G05B 19/409

(54) **HANDARBEITSPLATZBETREIBUNGSSYSTEM UND HANDARBEITSPLATZBEREITSTELLUNGSVERFAHREN**
MANUAL WORK STATION OPERATING SYSTEM AND METHOD FOR PROVIDING A MANUAL WORK STATION
SYSTÈME PERMETTANT LE FONCTIONNEMENT D'UN POSTE DE TRAVAIL MANUEL ET PROCÉDÉ DE PRÉPARATION D'UN POSTE DE TRAVAIL MANUEL

(30) Priorität: 13.10.2016 DE 102016220015
(43) Veröffentlichungstag der Anmeldung: 21.08.2019
(73) Patentinhaber: TRUMPF Werkzeugmaschinen SE + Co. KG, 71254 Ditzingen (DE)
(72) Erfinder: BAUER, Klaus, 71254 Ditzingen (DE); WAHL, Eberhard, 73235 Weilheim an der Teck (DE)
(74) Vertreter: Trumpf Patentabteilung
(86) Internationale Anmeldenummer: PCT/EP2017/075802
(87) Internationale Veröffentlichungsnummer: WO 2018/069314

(56) Entgegenhaltungen:
- WO-A1-2017/046248
- DE-A1- 102007 059 201
- US-A1- 2013 325 155
- US-A1- 2016 284 128
- US-B1- 6 224 385

## Beschreibung

Die Erfindung betrifft eine Handarbeitsplatzeinheit, Abseits-Datenverarbeitungsvorrichtung, Handarbeitsplatzbetreibungssystem, Handarbeitsplatzbetriebsverfahren und Handarbeitsplatzbereitstellungsverfahren und betrifft insbesondere solche Vorrichtungen und Verfahren zur Aufwandsminimierung mit Abseits-Datenverarbeitungsvorrichtungen.

In modernen Produktionsumgebungen ist die Einbindung von Maschinen und vernetzten Fertigungsanlagen in Arbeitsprozesse gut integriert und erzeugt erhebliche Produktivitäts-, Effizienz- und Zeitgewinne. In modernen Produktionsumgebungen gibt es jedoch nach wie vor Handarbeitsplätze. Bei Handarbeitsplätzen handelt es sich um Produktionsanlagen mit geringem Automatisierungsgrad und hohem Handarbeitsanteil. Im Wesentlichen bestehen sie aus einer Werkstattbank/Arbeitsfläche und einer Sammlung von Werkzeugen, die durch einen Bediener nach Anweisung oft frei Hand bedient werden. Durch den geringen Automatisierungsgrad kommt es zu Störungen und Mehraufwand im Prozessablauf, da hier neben der eigentlichen Fertigung eines Werkstücks weitere Nebentätigkeiten anfallen, wie das manuelle Erstellen von Arbeitsanweisungen, das Ausdrucken und Aneignen von Erklärungen, Anweisungen und Zeichnungen, hoher Fertigungsaufwand und hoher Ausschuss durch unzureichende oder zu komplexe Anweisungsunterlagen, fehlende Rückmeldung über den Arbeitsschrittfortschritt und allgemein fehlende Zustandsüberwachung und -diagnose von Werkzeugen und Maschinen.

In US 6224385 B1 wird eine Einrichtung beschrieben, die Arbeiter an einem Handarbeitsplatz einer Fertigungsstätte durch Anzeigen von bildlichen Arbeitsanweisungen auf einem Bildschirm eines Handarbeitsplatzes unterstützt.

In DE 102007059201 A1 wird ein Fertigungsverfahren für Kraftfahrzeuge beschrieben, bei welchem an Montagestationen dem Monteur an einem ihm zugeordneten Terminal alle wesentlichen Informationen zu dem aktuell auszuführenden Arbeitsschritt angezeigt werden. Die Stationen und Terminals stehen mit einem zentralen Fabrikserver in Verbindung.

Die oben genannten Probleme werden gelöst durch die Gegenstände der unabhängigen Ansprüche. Weitere vorteilhafte Ausgestaltungen sind Gegenstand der Unteransprüche.

Offenbart wird eine Handarbeitsplatzeinheit einer Fertigungsstätte eines Fertigungsstättenbetreibers, die aufweist: einen Handarbeitsplatz zur Ausführung von Fertigungsarbeiten an einem Bauteil, die zumindest teilweise, insbesondere zu einem wesentlichen Anteil, von Hand durchgeführt werden, eine Handarbeitsplatz-Datenverarbeitungsvorrichtung mit: einer Zustandsdaten-Ausgangsschnittstelle, die eingerichtet ist, über eine Zustandsdaten-Eingangsschnittstelle einer Abseits-Datenverarbeitungsvorrichtung Informationen über den Zustand des Handarbeitsplatzes an die Abseits-Datenverarbeitungsvorrichtung zu übermitteln, einer Steuerdaten-Eingangsschnittstelle, die eingerichtet ist, über eine Steuerdaten-Ausgangsschnittstelle der Abseits-Datenverarbeitungsvorrichtung Fertigungsinformation von der Abseits-Datenverarbeitungsvorrichtung zu beziehen, einem Handarbeitsplatz-Datenverarbeitungsvorrichtungs-Datenspeicher zum Speichern mindestens eines Fertigungsstättenprogramms, einer Benutzungsschnittstelle, die eingerichtet ist, Daten von der Handarbeits-Datenverarbeitungsvorrichtung an einen Benutzer auszugeben oder Dateneingaben des Benutzers in die Handarbeitsplatz-Datenverarbeitungsvorrichtung zu erlauben, wobei die Handarbeitsplatzeinheit ferner mindestens einen Sensor aufweist, der geeignet ist, das Bauteil zu erfassen und Bauteil-Zustandsdaten an die Handarbeitsplatz-Datenverarbeitungsvorrichtung zu übermitteln, wobei das mindestens eine Fertigungsstättenprogramm dazu eingerichtet ist, die Handarbeitsplatz-Datenverarbeitungsvorrichtung so zu steuern, Information zu Teilarbeitsschritten über die Benutzungsschnittstelle an den Benutzer zu übermitteln, und die Bauteil-Zustandsdaten über die Zustandsdaten-Ausgangsschnittstelle an die Zustandsdaten-Eingangsschnittstelle der Abseits-Datenverarbeitungsvorrichtung so zu übermitteln, dass die Abseits-Datenverarbeitungsvorrichtung den Fertigungsfortschritt des Bauteils erfassen kann. Das Fertigungsstättenprogramm ist demnach also dazu eingerichtet, die Handarbeitsplatz-Datenverarbeitungsvorrichtung in der Weise zu steuern, dass
- Informationen über den Zustand des Handarbeitsplatzes an die Abseits-Datenverarbeitungsvorrichtung übermittelt werden können,
- Fertigungsinformation von der Abseits-Datenverarbeitungsvorrichtung bezogen werden können,
- Daten von der Handarbeitsplatz-Datenverarbeitungsvorrichtung an einen Benutzer ausgegeben oder Daten des Benutzers in die Handarbeitsplatz-Datenverarbeitungsvorrichtung eingegeben werden können.

An dem Handarbeitsplatz kann ein Werkzeug, insbesondere Elektrowerkzeug, wie beispielsweise Schleifgerät, Schweißgerät, Bohrmaschine, Gewindeschneider oder ähnliche Geräte, die von Hand betrieben werden, vorgesehen sein. Dieses Werkzeug kann in mindestens einem Betriebsparameter wie seiner Betriebsdauer, seiner Belastung, seiner Umgebungstemperatur und anderen Parametern überwacht werden. Dazu kann der oder die Sensor(en) eingesetzt werden. Ein Sensor kann die Strommessung des vom Gerät verbrauchten Stroms sein. Das Werkzeug kann aber auch durch einen in ihm angeordneten Sensor und eine Datenschnittstelle zur Handarbeitsplatz-Datenverarbeitungsvorrichtung Daten über seinen Status übermitteln. Ein Beispiel wäre eine Funkverbindung, wie z.B. Bluetooth Verbindung. Dabei kann das mindestens eine Fertigungsstättenprogramm ferner dazu eingerichtet sein, die Handarbeitsplatz-Datenverarbeitungsvorrichtung so zu steuern, den Betriebsparameter an die Abseits-Datenverarbeitungsvorrichtung zu übermitteln.

Offenbart wird ferner, dass das Fertigungsstättenprogramm eingerichtet ist, Eingaben des Benutzers an die Handarbeitsplatz-Datenverarbeitungsvorrichtung oder über die Zustandsdaten-Ausgabeschnittstelle und die Zustandsdaten-Eingangsschnittstelle der Abseits-Datenverarbeitungsvorrichtung an die Abseits-Datenverarbeitungsvorrichtung zu übermitteln. Dies erlaubt eine Überwachung des Handarbeitsplatzes bzw. der Handarbeitsplatzeinheit über das betriebsinterne Zustandsüberwachungs- oder Diagnosesystem. Rückmeldungen können so betriebsintern oder betriebsübergreifend empfangen und weitergeleitet werden. Insbesondere können auch Werkzeuginformationen über den Handarbeitsplatz oder die Handarbeitsplatzeinheit und die Abseits-Datenverarbeitungsvorrichtung bis an einen Werkzeughersteller weitergeleitet werden, um diesen Informationen über die Werkzeugnutzung, Wartung oder Weiterentwicklung bereitzustellen.

Offenbart ist ferner dass bei der Handarbeitsplatzeinheit das mindestens eine Fertigungsstättenprogramm dazu eingerichtet ist, die Handarbeitsplatz-Datenverarbeitungsvorrichtung so zu steuern, dass die Handarbeitsplatz-Datenverarbeitungsvorrichtung aus den Bauteil-Zustandsdaten einen Fertigungsfortschritt ermittelt und das Ergebnis an die Abseits-Datenverarbeitungsvorrichtung überträgt, oder dass die Handarbeitsplatz-Datenverarbeitungsvorrichtung die von dem mindestens einen Sensor erfassten Bauteil-Zustandsdaten an die Abseits-Datenverarbeitungsvorrichtung weiterleitet, so dass diese Abseits-Datenverarbeitungsvorrichtung aus den Bauteil-Zustandsdaten den Fertigungsfortschritt ermitteln kann. Dies ermöglicht eine automatisierte Überwachung des Fertigungsfortschritts.

Offenbart wird ferner, dass das Fertigungsstättenprogramm modular, insbesondere aus mehreren Fertigungsstättenprogrammmodulen, aufgebaut sein kann. Dabei kann für einen oder mehrere Arbeitsprozesse ein Prozess-Fertigungsstättenprogrammmodul unabhängig von anderen Prozess-Fertigungsstättenprogrammmodulen erstellt oder ausgetauscht werden.

Die Handarbeitsplatz-Datenverarbeitungsvorrichtung kann ferner so eingerichtet sein, dass Daten, insbesondere Fertigungsstättenprogrammmodule individuell für unterschiedliche Werkzeuge, Arbeitsschritte oder Bauteile insbesondere von Drittanbietern wie Werkzeugherstellern, Materiallieferanten, Dienstleistern und Auftraggebern, erstellt, gepflegt oder ausgetauscht werden können.

Ein Werkzeugbereitsteller ist ein Betrieb oder eine Person, die ein Werkzeug 33, das am Handarbeitsplatz verwendet wird, bereit stellt oder für die Aufrechterhaltung dessen Betriebsfähigkeit zuständig ist.

Ein Auftraggeber kann ein Betrieb oder eine Person sein, die bei der Fertigungsstätte eine Ausführung von Fertigungsarbeiten in Auftrag gegeben hat.

Ein Dienstleister kann Bereitsteller von Dienstleistungen, wie Software, Messdatenerfassung, Analysesystemen, Diagnosewerkzeuge, oder ähnlichem sein.

Damit können Arbeitsanweisungen oder Prozessveränderungen, bei den Fertigungsarbeiten am Handarbeitsplatz schnell von dem oder den Drittanbieter(n) gepflegt werden. Unterbrechungszeiten in den Fertigungsarbeiten können so verkürzt werden.

Die Handarbeitsplatz-Datenverarbeitungsvorrichtung kann ferner so eingerichtet sein, dass Daten, insbesondere Daten von den benutzten Werkzeugen, über die Abseits-Datenverarbeitungsvorrichtung, Drittanbietern, insbesondere Werkzeugherstellern, Materiallieferanten, Dienstleistern und Auftraggebern, zur Verfügung gestellt werden können. Dabei werden erfindungsgemäß Daten von der Fertigungsstätte nach unterschiedlichen Geheimhaltungsstufen gekennzeichnet.

Eine hohe Geheimhaltungsstufe kann sein, Daten nur anonymisiert weiterzugeben. Eine niedrige Geheimhaltungsstufe kann sein, Daten mit Herkunftsangabe weitergeben zu dürfen, aber nur an bestimmte vom Fertigungsstättenbetreiber vorgegebene Drittanbieter.

Offenbart wird ferner eine Abseits-Datenverarbeitungsvorrichtung, die aufweist: eine Auftragsdaten-Eingangsschnittstelle, die eingerichtet ist, Kundenaufträge zur Fertigung eines Bauteils an einer wie oben beschriebenen Handarbeitsplatzeinheit zu empfangen, eine Zustandsdaten-Eingangsschnittstelle, die eingerichtet ist, über die Zustandsdaten-Ausgangsschnittstelle der Handarbeitsplatzeinheit Informationen über den Zustand des Handarbeitsplatzes zu empfangen, eine Steuerdaten-Ausgangsschnittstelle, die eingerichtet ist, über die Steuerdaten-Eingangsschnittstelle der Handarbeitsplatzeinheit Fertigungsinformation an die Handarbeitsplatzeinheit zu übermitteln, einen Abseits-Datenspeicher zum Speichern mindestens eines Fertigungssteuerprogramms, wobei das mindestens eine Fertigungssteuerprogramm dazu eingerichtet ist, die Abseits-Datenverarbeitungsvorrichtung so zu steuern, aus einem über die Auftragsdaten-Eingangsschnittstelle eingegangenen Auftrag Teilarbeitsschritte zur Fertigung eines Bauteils zu ermitteln, Informationen mit Bezug zu den Teilarbeitsschritten über die Steuerdaten-Ausgangsschnittstelle und die Steuerdaten-Eingangsschnittstelle der Handarbeitsplatzeinheit an die Handarbeitsplatzeinheit zu übermitteln, Bauteil-Zustandsdaten über die Zustandsdaten-Ausgangsschnittstelle der Handarbeitsplatzeinheit und die Zustandsdaten-Eingangsschnittstelle so zu empfangen, dass die Abseits-Datenverarbeitungsvorrichtung den Fertigungsfortschritt des Bauteils erfassen kann.

Offenbart wird ferner, dass die Abseits-Datenverarbeitungsvorrichtung ferner aufweist: eine Werkzeug-Datenbasis zum Speichern von Informationen über Werkzeuge, die am Handarbeitsplatz der Handarbeitsplatzeinheit verwendbar sind. Dadurch, dass auf der Abseits-Datenverarbeitungsvorrichtung Informationen über die am Handarbeitsplatz vorhandenen Werkzeuge geführt werden, kann das System entscheiden, welche Module des Fertigungssteuerprogramms für diese Handarbeitsplatzeinheit benötigt werden und welches Fertigungsstättenprogrammmodul zur Fertigung eines Bauteils an die Handarbeitsplatzeinheit zu übertragen wären.

Offenbart ist ferner, dass die Abseits-Datenverarbeitungsvorrichtung ferner aufweist: eine Fertigungsschritt-Datenbasis zum Speichern von Informationen über Fertigungsschritte, die am Handarbeitsplatz der Handarbeitsplatzeinheit ausgeführt werden können. Dadurch, dass auf der Abseits-Datenverarbeitungsvorrichtung Informationen über die am Handarbeitsplatz durchführbaren Arbeitsschritte geführt werden, kann das System entscheiden, welche Module des Fertigungssteuerprogramms für diese Handarbeitsplatzeinheit benötigt werden und welches Fertigungsstättenprogrammmodul zur Fertigung eines Bauteils an die Handarbeitsplatzeinheit zu übertragen wäre.

Offenbart ist ferner dass das Fertigungssteuerprogramm modular, insbesondere aus mehreren Fertigungssteuerprogrammmodulen, aufgebaut ist, so dass für jeden Arbeitsprozess ein Prozess-Fertigungssteuerprogrammmodul unabhängig von anderen Prozess-Fertigungssteuerprogrammmodulen erstellt oder ausgetauscht werden kann. Dies erlaubt die isolierte Entwicklung von Programmmodulen, insbesondere durch Drittanbieter wie Werkzeugherstellern und Auftraggebern.

Offenbart wird ferner ein Handarbeitsplatzbetreibungssystem, das die oben beschriebene Handarbeitsplatzeinheit und die oben beschriebene Abseits-Datenverarbeitungsvorrichtung beinhaltet. Fertigungsstättenprogrammmodule und Fertigungssteuerprogrammmodule können individuell für unterschiedliche Werkzeuge, Arbeitsschritte oder Bauteile insbesondere von Drittanbietern wie Werkzeugherstellern und Auftraggebern erstellt werden.

Offenbart ist ferner, dass die Abseits-Datenverarbeitungsvorrichtung zumindest eine weitere Schnittstelle für eine weitere Fertigungsstätte aufweist, die örtlich oder organisatorisch von der ersten Fertigungsstätte getrennt ist. Mit der organisatorischen Trennung ist gemeint, dass die weitere Fertigungsstätte keine Daten mit der ersten Fertigungsstätte austauscht. Insbesondere soll das Fertigungssteuerprogramm so ausgelegt sein, dass sichergestellt werden kann, dass es zu keiner Bereitstellung von Daten der ersten Fertigungsstätte mit der weiteren Fertigungsstätte und umgekehrt kommt.

Offenbart ist ferner, dass die Abseits-Datenverarbeitungsvorrichtung eine, insbesondere mehrere, Werkzeugbereitsteller-Schnittstelle(n) für eine, insbesondere mehrere, Datenverbindung(en) von der Abseits-Datenverarbeitungsvorrichtung zu einem, insbesondere mehreren, insbesondere abseits gelegenen, Werkzeugbereitsteller(n) aufweist. Diese(r) Werkzeugbereitsteller können Informationen zum Betreiben des Werkzeugs über die Abseits-Datenverarbeitungsvorrichtung dem oder den Fertigungsstättenbetreiber(n) zur Verfügung stellen. Der oder die Fertigungsstättenbetreiber können dem oder den Werkzeugbereitsteller Daten über die Nutzung und den Status des am Handarbeitsplatz verwendeten Werkzeugs zur Verfügung stellen. Daraus können Informationen für die verbesserte Werkzeugnutzung, dessen Wartung oder Weiterentwicklung genutzt werden.

Offenbart wird ferner, dass eines, insbesondere mehrere, der Prozess-Fertigungssteuerprogrammmodule von einem, insbesondere mehreren, Werkzeugbereitsteller zur Verfügung gestellt und/oder ausgetauscht und/oder gepflegt werden kann bzw. können.

Offenbart wird ferner, dass eines, insbesondere mehrere, der Prozess-Fertigungssteuerprogrammmodule von einem, insbesondere mehreren, Fertigungsstättenbetreiber ausgewählt und genutzt werden kann bzw. können.

Die Abseits-Datenverarbeitungsvorrichtung kann ferner eine, insbesondere mehrere, Auftragsdaten-Eingangsschnittstelle(n) für eine, insbesondere mehrere, Datenverbindung(en) von der Abseits-Datenverarbeitungsvorrichtung zu einem, insbesondere mehreren, insbesondere abseits gelegenen, Auftraggeber(n) aufweisen. Die Auftraggeber können insbesondere örtlich oder organisatorisch getrennt voneinander gelegen sein.

Die Abseits-Datenverarbeitungsvorrichtung kann ferner eine, insbesondere mehrere, Dienstleister-Schnittstelle(n) für eine, insbesondere mehrere, Datenverbindung(en) von der Abseits-Datenverarbeitungsvorrichtung zu einem, insbesondere mehreren, insbesondere abseits gelegenen, Dienstleister(n) aufweisen. Dienstleister können insbesondere örtlich oder organisatorisch getrennt voneinander gelegen sein.

Das Fertigungssteuerprogramm kann ausgelegt sein, die Abseits-Datenverarbeitungsvorrichtung so zu steuern, dass die Daten der Auftraggeber, der Werkzeughersteller, der Fertigungsstätte(n) und der Dienstleister (gemeinsam Drittanbieter) nach den Vorgaben der Bereitstellung der Datenerzeuger soweit voneinander getrennt sind, dass die einzelnen Drittanbieter nur Zugriff auf Daten bekommen, die ihnen von dem Datenerzeuger freigegeben worden sind.

Auch anonymisierte Daten von der Handarbeitsplatzeinheit oder von einem dort verwendeten Werkzeug können beispielsweise für einen Werkzeughersteller von großer Bedeutung sein, wenn er z.B. Rückschlüsse auf die üblichen Betriebszeiten ziehen kann. Deswegen kann ein Betreiber der Abseits-Datenverarbeitungsvorrichtung das Weiterleiten dieser Daten zu einem kostenpflichtigen Dienstleistungsangebot ausbauen.

Offenbart wird ferner ein Handarbeitsplatzbetriebsverfahren, das die Schritte aufweist: Empfangen von Auftragsdaten durch eine Abseits-Datenverarbeitungsvorrichtung, Ermitteln von Teilarbeitsschritten zur Fertigung eines Bauteils aus den Auftragsdaten durch die Abseits-Datenverarbeitungsvorrichtung, Übermitteln von Informationen mit Bezug zu den Teilarbeitsschritten an eine Handarbeitsplatzeinheit, Anzeigen der Informationen mit Bezug zu den Teilarbeitsschritten durch eine Benutzungsschnittstelle der Handarbeitsplatzeinheit, Erfassen von Bauteil-Zustandsdaten durch einen Sensor der Handarbeitsplatzeinheit, Übermitteln von Bauteil-Zustandsdaten oder einem Fertigungsfortschritt des Bauteils an die Abseits-Datenverarbeitungsvorrichtung, Erfassen des Fertigungsfortschritts des Bauteils durch die Abseits-Datenverarbeitungsvorrichtung, Mitteilung der Fertigstellung des Bauteils durch die Abseits-Datenverarbeitungsvorrichtung an einen Benutzer oder ein Datenverarbeitungssystem.

Offenbart wird ferner ein Handarbeitsplatzbereitstellungsverfahren, das die Schritte aufweist: Bereitstellen einer Abseits-Datenverarbeitungsvorrichtung wie oben beschreiben, Bereitstellen einer Handarbeitsplatzeinheit wie oben beschrieben, Erstellen mindestens eines arbeitsprozess-individuellen Fertigungssteuerprogrammmoduls, Speichern des arbeitsprozess-individuellen Fertigungssteuerprogrammmoduls im Abseits-Datenspeicher, Erstellen mindestens eines arbeitsprozess-individuellen Fertigungsstättenprogrammmoduls, Speichern des arbeitsprozess-individuellen Fertigungsstättenprogrammmoduls im Handarbeitsplatz-Datenverarbeitungsvorrichtungs-Datenspeicher.

Dabei ist die Reihenfolge der Verfahrensschritte nur exemplarisch. Die einzelnen Schritte können auch in anderer Reihenfolge erfolgen.

Vorteilhaft an Einrichtung, System und Verfahren ist, dass eine Arbeitsanweisung in der Abseits-Datenverarbeitungsvorrichtung generiert werden kann. Hierdrauf kann dem Werkzeughersteller und dem Fertigungsstättenbetreiber jeweils so getrennt Zugriff gewährt werden.

Vorteilhaft ist ferner dass keiner der mindestens zwei Zugriffsberechtigten auf die Abseits-Datenverarbeitungsvorrichtung auf sicherheitsrelevante Daten des jeweils anderen Zugriff bekommen kann und zugleich Daten, die für Auftragsabwicklung, Werkzeugnutzung, Arbeitsanweisung relevant sind, austauschen kann.

Weitere Vorteile und vorteilhafte Ausgestaltung des Gegenstands der Erfindung sind der Beschreibung, den Zeichnungen und den Ansprüchen entnehmbar. Ebenso können die vorstehenden genannten und die noch weiter aufgeführten Merkmale und Vorteile jeweils einzeln oder für sich oder in beliebigen Kombinationen Verwendung finden.

Im Folgenden wird ein Ausführungsbeispiel der Erfindung anhand der Figuren beschrieben.
Fig. 1 zeigt ein Ausführungsbeispiel eines erfindungsgemäßen Handarbeitsplatzbetreibungssystems.
Fig. 2 zeigt eine Handarbeitsplatzeinheit des Ausführungsbeispiels.
Fig. 3 zeigt eine Abseits-Datenverarbeitungsvorrichtung des Ausführungsbeispiels.
Fig. 4 zeigt ein Ablaufdiagramm eines erfindungsgemäßen Handarbeitsplatzbetriebsverfahrens.

Es wurden Versuche mit intelligent vernetzten Montageplätzen durchgeführt, die über Anzeigen und Projektionssysteme die Prozessstörung reduzieren. In einem solchen intelligenten vernetzten Montageplatz identifiziert das System mittels Sensortechnik das jeweilige Werkstück und lädt einen entsprechenden Arbeitsplan über eine Anbindung aus dem übergeordneten Unternehmenseinsatzplanungssystem. Um den Bearbeiter insbesondere auch während der produktiven Arbeit für den Arbeitsschritt zu schulen, kann das System die relevanten Produktionsschritte des Montageprozesses mittels eines bildgebenden Verfahrens anzeigen und mittels eines Kamerasystems verfolgen. Dadurch lassen sich Montageschritte prüfen, mittels Gestenerkennung die Fortschritte des Arbeitsschrittes steuern und schließlich die korrekte Montage sicherstellen. Dazu wird beispielsweise ein Infrarot-Punktemuster in den Raum projiziert. Die reflektierten Infrarotstrahlen werden durch ein Infrarotkamerasystem empfangen und mittels Triangulationsverfahren zu einem Tiefenbild der Szene zusammengefügt. Auf diese Weise können der gesamte Montagebereich erkannt und Produktionsschritte verfolgt werden. Über ein Anzeigesystem können visuelle Hilfestellungen in Form von Text, Graphik oder Videosequenzen bereitgestellt oder durch ein Projektionssystem direkt auf den Montagearbeitsplatz projiziert werden. Zur Qualitätssicherung können weitere Schnittstellen zur Positionserkennung oder Schraubdatenerkennung vorgesehen sein, wodurch sich Werkzeugprozesse (z.B. Position eines Schraubersystems) gezielt erkennen und steuern lassen.

Bei diesen intelligenten vernetzten Montageplätzen besteht das Problem, dass durch die hohe Diversität an den Handarbeitsplätzen eine Verwaltung solcher Systeme und eine Versorgung solcher Systeme mit entsprechenden Informationen schwierig sind. Solche Stationen sind mit unterschiedlichen Werkzeugen von unterschiedlichen Herstellern versehen. Ferner werden durch die große Bandbreite an zu fertigenden Bauteilen hohe Anforderungen an die Informationssysteme gestellt. Problematisch ist ferner, dass die Erzeugung der Arbeitsanweisung aufwändig ist, da diese im Regelfall mit Einlernverfahren erstellt werden muss.

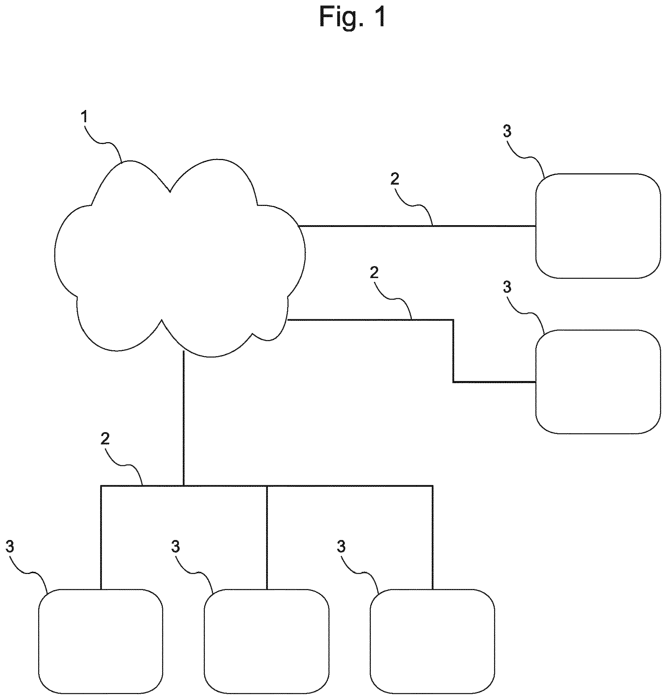

Anhand von Fig. 1 wird ein Ausführungsbeispiel eines erfindungsgemäßen Handarbeitsplatzbetreibungssystems beschrieben.

Das Handarbeitsplatzbetreibungssystem weist eine Abseits-Datenverarbeitungsvorrichtung 1 auf. Bei der Abseits-Datenverarbeitungsvorrichtung handelt es sich um eine elektronische Datenverarbeitungsvorrichtung, die örtlich abseits von einer Betriebsstätte untergebracht ist. Hierbei kann es sich um eine einzelne elektronische Datenverarbeitungsvorrichtung (Server) oder um einen Verbund von mehreren Datenverarbeitungsvorrichtungen (Serververbund/Cloud) handeln. Die Abseits-Datenverarbeitungsvorrichtung 1 ist über Kommunikationsverbindungen 2 mit Handarbeitsplatzeinheiten 3 verbunden. Sie kann auch mit nur einer Handarbeitsplatzeinheit 3 verbunden sein.

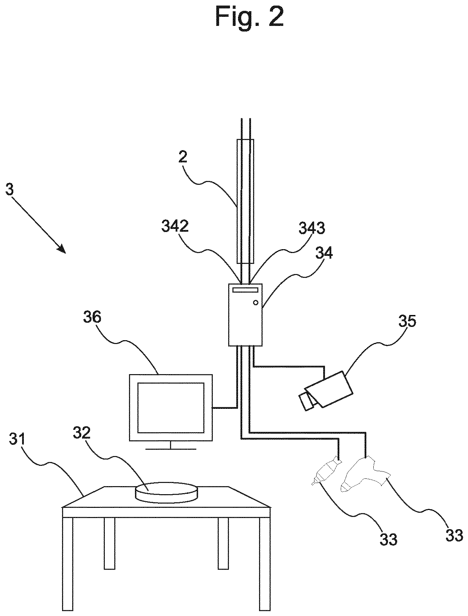

Unter Bezugnahme auf Fig. 2 wird eine Handarbeitsplatzeinheit 3 beschrieben. Die Handarbeitsplatzeinheit 3 ist in einer Fertigungsstätte eines Fertigungsstättenbetreibers verortet und dient zur Ausführung von Fertigungsarbeiten an einem Bauteil 32, die zumindest teilweise von Hand durchgeführt werden Die Handarbeitsplatzeinheit 3 besteht aus einer Arbeitsfläche 31 zur Bearbeitung eines Bauteils 32. Ferner verfügt die Handarbeitsplatzeinheit 3 über mehrere Werkzeuge 33. Ein Bauteil kann insbesondere ein Bauteil aus Metall, insbesondere Stahl, insbesondere ein blechförmiges Bauteil sein. Ein Werkzeug kann ein Elektrowerkzeug, insbesondere zur Blechbearbeitung sein. Es kann eine Bohrmaschine, insbesondere Handbohrmaschine, Gewindeschneidgerät, Schleifgerät, Schergerät, Nibblergerät, Schweißgerät, Reinigungsgerät sein.

Die Handarbeitsplatzeinheit 3 weist eine Handarbeitsplatz-Datenverarbeitungsvorrichtung 34 mit einem Handarbeitsplatz-Datenverarbeitungsvorrichtungs-Datenspeicher 341 auf, die über die Kommunikationsverbindung 3 mit der Abseits-Datenverarbeitungsvorrichtung 1 verbunden ist. Auf dem Handarbeitsplatz-Datenverarbeitungsvorrichtungs-Datenspeicher 341 ist ein Fertigungsstättenprogramm gespeichert. Über eine Zustandsdaten-Ausgangsschnittstelle 342 werden Daten über den Zustand der Handarbeitsplatzeinheit an die Abseits-Datenverarbeitungsvorrichtung 1 übermittelt. Diese Daten können Informationen über den Zustand der Werkzeuge, den Fertigungsfortschritt des Bauteils oder Sensordaten der Handarbeitsplatzeinheit sein. Über eine Steuerdaten-Eingangsschnittstelle 343 werden Fertigungsinformationen von der Abseits-Datenverarbeitungsvorrichtung 1 an die Handarbeitsplatz-Datenverarbeitungsvorrichtung 34 übertragen.

Die Fertigungsinformationen werden nach Übertragung auf dem Handarbeitsplatz-Datenverarbeitungsvorrichtungs-Datenspeicher 341 gespeichert.

Die Handarbeitsplatzeinheit 3 verfügt ferner über einen oder mehrere Sensoren 35 zur Erfassung des Bauteils 32 oder von Bearbeitungsvorgängen an dem Bauteil. Der bzw. einer der Sensoren 35 kann beispielsweise eine Kamera sein, die die Arbeitsfläche 31 erfasst. Ein Sensor kann auch ein Sensorsystem sein, das den kompletten Arbeitsbereich dreidimensional erfasst. Beispielhaft aber nicht abschließend können als Sensoren Kameras, Schall-, Ultraschall-, Radarsensoren oder Laserscanner Verwendung finden. Ein Sensor kann auch in oder an einem Werkzeug 33 vorgesehen sein. Alle diese Sensoren können datentechnisch mit der Handarbeitsplatz-Datenverarbeitungsvorrichtung 34 verbunden sein. So kann eine datentechnische Verbindung von einem Sensor in oder an einem Werkzeug Betriebsparameter wie seine Betriebsdauer, seine Belastung, seine Umgebungstemperatur und anderen Parametern an die Handarbeitsplatz-Datenverarbeitungsvorrichtung 34 übermitteln. Diese kann die Daten aufbereiten und ganz oder teilweise an die Abseits-Datenverarbeitungsvorrichtung 1 weiterleiten. Der Betreiber der Abseits-Datenverarbeitungsvorrichtung 1 kann diese Daten nun seinerseits auswerten und beispielsweise dem Werkzeughersteller des Werkzeugs zur Verfügung stellen. Die datentechnische Verbindung zwischen Werkzeug 33 und Handarbeitsplatz-Datenverarbeitungsvorrichtung 34 kann mit einer drahtlosen Verbindung erfolgen, so dass sie im Werkzeug 33 gekapselt sicher vor Verschmutzung im industriellen Umfeld untergebracht ist. Ein besonders einfach zu realisierender Sensor ist eine Vorrichtung zum Ermitteln des Stroms oder der verbrauchten elektrischen Leistung. Schon mit einem solchen Sensor kann die Handarbeitsplatz-Datenverarbeitungsvorrichtung 34 oder auch die Abseits-Datenverarbeitungsvorrichtung 1 die Betriebsdauer und in gewisser Weise auch die Belastung des Werkzeugs 33 ermitteln. Für den Werkzeughersteller kann diese Information schon sehr wertvoll sein. Erstens wenn er sie zusammen mit der Information bekommt, welches Werkzeug genau wie lange und unter welchen Bedingungen eingesetzt wird oder worden ist. Interessant kann für den Werkzeughersteller auch die anonymisierte Information sein, wenn er diese Information von vielen seiner Werkzeuge erhält. Er kann dann einen Überblick bekommen, wie lange seine Werkzeuge üblicherweise innerhalb eines Jahres eingesetzt werden und wie er die einzelnen Komponenten auslegen muss, damit die Werkzeuge diese Betriebsbedingungen erfolgreich über mehrere zig Jahre überstehen.

Die Handarbeitsplatzeinheit 3 weist eine Anzeigevorrichtung 36 auf. Bei der Anzeigevorrichtung 36 handelt es sich im Ausführungsbeispiel um ein herkömmliches Datensichtgerät (Monitor), das an die Handarbeitsplatz-Datenverarbeitungsvorrichtung 34 angeschlossen ist. Alternativ oder zusätzlich kann es sich um ein Projektionssystem handeln, das ein Bild auf die Arbeitsfläche projizieren kann. Alternativ oder zusätzlich kann es sich um eine tragbare EDV-Anlage wie ein Tabletcomputer handeln, der z.B. mittels Kabel oder mittels einer Funkverbindung, beispielsweise WLAN, insbesondere nach dem Standard IEEE-802.11, oder Bluetooth, insbesondere nach dem Standard IEEE 802.15.1, mit der Handarbeitsplatzdatenverarbeitungsvorrichtung 34 verbunden ist. Über diesen können Informationen angezeigt werden, die durch das Fertigungsstättenprogramm erzeugt werden. Die Anzeigevorrichtung in Form eines Tabletcomputers kann auch direkt mit der Abseits-Datenverarbeitungsvorrichtung 1 verbunden sein.

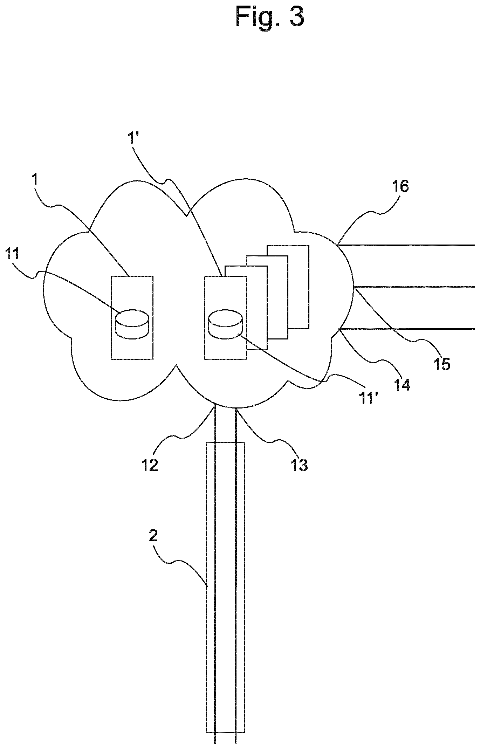

Unter Bezugnahme auf Fig. 3 wird die Abseits-Datenverarbeitungsvorrichtung 1 im Detail beschrieben. Wie bereits ausgeführt, ist die Abseits-Datenverarbeitungsvorrichtung 1 örtlich abseits von der Fertigungsstätte der Handarbeitsplatzeinheiten 3 untergebracht. Die Abseits-Datenverarbeitungsvorrichtung 1 kann sich an zentraler Stelle im Einflussbereich des Fertigungsstättenbetreibers, eines Maschinenherstellers oder eines anderen externen Dienstleisters befinden.

Die Abseits-Datenverarbeitungsvorrichtung 1 verfügt über einen Abseits-Datenverarbeitungsvorrichtungs-Datenspeicher 11, auf dem ein Fertigungssteuerprogramm gespeichert ist. Über eine Zustandsdaten-Eingangsschnittstelle 12 werden Daten über den Zustand der Handarbeitsplatzeinheit 3 über die Datenverbindung 2 empfangen. Über eine Steuerdaten-Ausgangsschnittstelle 13 werden Fertigungsinformationen von der Abseits-Datenverarbeitungsvorrichtung 1 an die Handarbeitsplatz-Datenverarbeitungsvorrichtung 34 übertragen.

Fertigungsstättenprogramm und Fertigungssteuerprogramm sind so gestaltet, dass über allgemeine Schnittstellen Programmmodule unabhängig voneinander durch unterschiedliche Anbieter erstellt werden können. Hierbei gibt es jeweils ein Fertigungssteuerprogrammmodul, beispielsweise für ein bestimmtes Werkzeug 33, das auf der Abseits-Datenverarbeitungsvorrichtung 1 ausführbar ist und bei Ausführung die für dieses Werkzeug 33 erforderlichen Steuervorgänge auf der Abseits-Datenverarbeitungsvorrichtung 1 veranlasst, und ein zugeordnetes Fertigungsstättenprogrammmodul, das auf der Handarbeitsplatz-Datenverarbeitungsvorrichtung 34 ausführbar ist und bei Ausführung alle erforderlichen Steuer- und Anzeigevorgänge auf der Handarbeitsplatz-Datenverarbeitungsvorrichtung 34 veranlasst. Die Programmmodule können sich auf einzelne Werkzeuge beziehen und werden beispielsweise von einem Werkzeughersteller bereitgestellt. Sie können sich auch auf einzelne Arbeitsschritte beziehen, die an der Handarbeitsplatzeinheit 3 ausgeführt werden sollen oder können, und können von einem Auftraggeber bereitgestellt werden. Module des Fertigungsstättenprogramms können bei Bedarf über die Abseits-Datenverarbeitungsvorrichtung 1 auf die Handarbeitsplatzeinheit 3 übertragen werden. Hierbei bietet das Fertigungsstättenprogramm eine Benutzungsoberfläche, die eine Liste von auswählbaren Fertigungsstättenprogrammmodulen anzeigt, die an der Handarbeitsplatzeinheit 3 ausgewählt, heruntergeladen und auf dem Handarbeitsplatz-Datenverarbeitungsvorrichtungs-Datenspeicher 341 gespeichert und von der Handarbeitsplatz-Datenverarbeitungsvorrichtung 34 ausgeführt werden können.

Auf dem Handarbeitsplatz-Datenverarbeitungsvorrichtungs-Datenspeicher 341 kann eine Werkzeug-Datenbasis gespeichert sein. In dieser Datenbasis ist eine Liste der Werkzeuge 33 gespeichert, die an der Handarbeitsplatzeinheit 3 verfügbar sind. Über die Werkzeug-Datenbasis wird bestimmt, welche Module der Handarbeitsplatzeinheit zum Herunterladen angezeigt werden; nur solche Module, zu welchen ein geeignetes Werkzeug an der Handarbeitsplatzeinheit 3 verfügbar ist, werden an der Handarbeitsplatzeinheit zum Herunterladen angezeigt.

Auf dem Handarbeitsplatz-Datenverarbeitungsvorrichtungs-Datenspeicher 341 kann eine Fertigungsschritt-Datenbasis gespeichert sein.

In dieser Datenbasis ist eine Liste der Fertigungsschritte gespeichert, die an der Handarbeitsplatzeinheit 3 ausführbar sind. Über die Werkzeug-Datenbasis wird bestimmt, welche Module der Handarbeitsplatzeinheit zum Herunterladen angezeigt werden; nur solche Module, zu welchen ein geeignetes Werkzeug an der Handarbeitsplatzeinheit 3 verfügbar ist, werden an der Handarbeitsplatzeinheit zum Herunterladen angezeigt.

Die Abseits-Datenverarbeitungsvorrichtung 1 weist eine Auftragsdaten-Eingangsschnittstelle 14 auf. Über diese können von einem Auftraggeber Daten an die Abseits-Datenverarbeitungsvorrichtung 1 übermittelt werden, die einen Auftrag darstellen und Informationen zur Fertigung eines Bauteils 32 enthalten. Ein Auftraggeber kann ein Betrieb oder eine Person sein, die bei der Fertigungsstätte eine Ausführung von Fertigungsarbeiten in Auftrag gegeben hat.

Die Abseits-Datenverarbeitungsvorrichtung 1 verfügt über eine Werkzeugbereitsteller-Schnittstelle 15. Über die Werkzeugbereitsteller-Schnittstelle 15 werden Informationen zu Betriebsparametern der Werkzeuge 33 der Handarbeitsplatzeinheit 3 an Werkzeugbereitsteller übermittelt, soweit diese dazu berechtigt wurden. Ein Werkzeugbereitsteller ist ein Betrieb oder eine Person, die ein Werkzeug 33, das am Handarbeitsplatz verwendet wird, bereit stellt oder für die Aufrechterhaltung dessen Betriebsfähigkeit zuständig sind. Diese Datenübermittlung ermöglicht es dem Werkzeugbereitsteller, die Betriebsfähigkeit des Werkzeugs 33 aufrecht zu erhalten (Wartung) oder herzustellen (Reparatur).

Die Abseits-Datenverarbeitungsvorrichtung 1 kann eine Drittanbieter-Schnittstelle 16 aufweisen.

Ein Drittanbieter ist ein Auftraggeber, Werkzeugbereitsteller oder Dienstleister. Ein Dienstleister ist ein Bereitsteller von Dienstleistungen, wie Software, Messdatenerfassung, Analysesystemen, Diagnosewerkzeuge, oder ähnlichem. Über die Drittanbieter-Schnittstelle 16 werden von Drittanbietern entwickelte Fertigungsstättenprogrammmodule und Fertigungssteuerprogrammmodule auf die Abseits-Datenverarbeitungsvorrichtung 1 hochgeladen und so dem Handarbeitsplatzbetreibungssystem zur Verfügung gestellt. Zur Entwicklung der Fertigungsstättenprogrammmodule und Fertigungssteuerprogrammmodule werden den Drittanbietern je eine Software-Entwicklerausrüstung (software development kit, SDK) für Fertigungsstättenprogrammmodule und Fertigungssteuerprogrammmodule bereitgestellt.

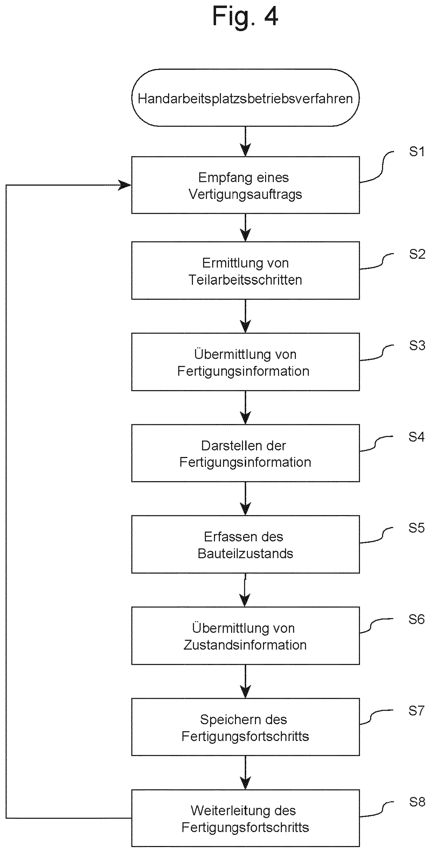

Unter Bezugnahme auf Fig. 4 wird ein Handarbeitsplatzbetriebsverfahren beschrieben. Dabei ist die Reihenfolge der Verfahrensschritte nur exemplarisch. Die einzelnen Schritte können auch in anderer Reihenfolge erfolgen.

In einem Schritt S1 wird von der Abseits-Datenverarbeitungsvorrichtung 1 über die Auftragsdaten-Eingangsschnittstelle 14 ein Fertigungsauftrag eines Kunden empfangen.

In einem Schritt S2 werden aus diesen Auftragsdaten Teilarbeitsschritte zur Fertigung des Bauteils 32 ermittelt.

In einem Schritt S3 werden Informationen mit Bezug zu den Teilarbeitsschritten (Fertigungsinformationen) an die Handarbeitsplatzeinheit 3 übermittelt. Diese Fertigungsinformationen können Baupläne, Fertigungsanweisungen, Werkzeug-Voreinstellungen oder dergleichen sein.

In einem Schritt S4 werden die Fertigungsinformationen zu den Teilarbeitsschritten oder Teile daraus auf der Anzeigevorrichtung 36 dargestellt.

In einem Schritt S5 wird durch den Sensor 35 Bauteil-Zustandsinformation, wie beispielsweise Lage oder Fertigungsfortschritt ermittelt und in einem Schritt S6 an die Abseits-Datenverarbeitungsvorrichtung 1 übermittelt. Hierbei wird im Ausführungsbeispiel durch die Handarbeitsplatzeinheit 3 der Bauteil-Zustand aus den Sensordaten ermittelt und das Ergebnis an die Abseits-Datenverarbeitungsvorrichtung 1 übermittelt. Alternativ oder zusätzlich können die rohen Sensordaten von der Handarbeitsplatzeinheit 3 an die Abseits-Datenverarbeitungsvorrichtung 1 übermittelt werden, sodass die Abseits-Datenverarbeitungsvorrichtung 1 aus den Rohdaten den Bauteil-Zustand selbst ermitteln kann. Alternativ oder zusätzlich können Werkzeug-Betriebsparameterinformationen des Werkzeugs 33, die mittels des Sensors 35 oder eigenen Werkzeugsensoren gewonnen werden, an die Abseits-Datenverarbeitungsvorrichtung 1 übermittelt werden.

In einem Schritt S7 wird der Fertigungsfortschritt des Bauteils 32 nach Übermittlung oder eigener Ermittlung in der Abseits-Datenverarbeitungsvorrichtung 1 gespeichert.

In einem Schritt S8 wird nach Erfassung der Fertigstellung des Bauteils 32 dies einem Benutzer oder einem weiteren Datenverarbeitungssystem, beispielsweise einem übergeordneten EPR-System mitgeteilt. Alternativ oder zusätzlich werden die Werkzeug-Betriebsinformationen oder Teile davon über die Werkzeug-Bereitstellerschnittstelle 15 an berechtigte Werkzeugbereitsteller übermittelt.

Ist ein beanspruchtes Handarbeitsplatzbetreibungssystem bereitgestellt, können arbeitsprozess-individuelle Module für Fertigungsstättenprogramm und Fertigungssteuerprogramm insbesondere von Drittanbietern unabhängig voneinander entwickelt, über die Drittanbieter-Schnittstelle 16 auf die Abseitsdaten-verarbeitungsvorrichtung übermittelt und bereitgestellt werden. Ferner können bei Bedarf Fertigungsstättenprogramm-Module über die Abseits-Datenverarbeitungsvorrichtung 1 an die Handarbeitsplatzeinheit 3 übermittelt werden. Anstelle oder zusätzlich von Bauteil-Zustandsdaten können Werkzeugdaten von der Handarbeitsplatzeinheit 3 an die Abseits-Datenverarbeitungsvorrichtung 1 übermittelt werden. Diese Werkzeugdaten können zu Wartungs- oder Vertriebszwecken Dritten - beispielsweise Werkzeugherstellern - überlassen werden.

Die gezeigten und beschriebenen Ausführungsformen sind nicht als abschließende Aufzählung zu verstehen, sondern haben vielmehr beispielhaften Charakter für die Schilderung der Erfindung. Für den Fachmann ist offensichtlich, dass innerhalb des durch die Ansprüche definierten Rahmens weitere Ausführungsformen denkbar sind.

Beispielsweise handelt es sich im Ausführungsbeispiel bei der Abseits-Datenverarbeitungsvorrichtung um eine elektronische Datenverarbeitungsvorrichtung (1). Alternativ kann es sich auch um einen Verbund von elektronischen Datenverarbeitungsvorrichtungen (1') handeln. In einer weiteren Alternative kann es sich bei der Abseits-Datenverarbeitungsvorrichtung um eine virtuelle Maschine handeln, die auf einer Datenverarbeitungsvorrichtung abseits der Fertigungsstätte der Handarbeitsplatzeinheit ausgeführt wird. Letzteres bietet den Vorteil, dass für jede Fertigungsstätte eine isolierte Abseits-Datenverarbeitungsvorrichtung bereitgestellt werden kann, sodass ein ungewollter Datenaustausch zwischen unabhängigen Fertigungsstätten und eine Beeinträchtigung anderer Fertigungsstätten vermieden werden kann. Alternativ ist es auch möglich, eine Abseits-Datenverarbeitungsvorrichtung in Verbindung mit mehreren Fertigungsstätten zu betreiben.

Die Junktoren "und", "oder" und "entweder ... oder" werden in der Bedeutung verwendet, die an die logische Konjunktion, die logische Adjunktion (oft "und/oder") bzw. die logische Kontravalenz angelehnt sind. Eine Auflistung von Verfahrensschritten dient lediglich der Darstellung einer Menge von Verfahrensschritten und impliziert keine Reihenfolge der Verfahrensschritte in der Reihenfolge der Auflistung, es sei denn, eine Reihenfolge ist explizit angegeben.

## Patentansprüche

1. Handarbeitsplatzbetreibungssystem, das aufweist:
- eine Handarbeitsplatzeinheit (3) einer Fertigungsstätte eines Fertigungsstättenbetreibers, und
- eine Abseits-Datenverarbeitungsvorrichtung (1)
wobei die Handarbeitsplatzeinheit (3) aufweist:
a) einen Handarbeitsplatz (31) zur Ausführung von Fertigungsarbeiten an einem Bauteil (32), die zumindest teilweise von Hand durchgeführt werden,
b) eine Handarbeitsplatz-Datenverarbeitungsvorrichtung (34) mit:
i) einer Zustandsdaten-Ausgangsschnittstelle (342), die eingerichtet ist, über eine Zustandsdaten-Eingangsschnittstelle (12) der Abseits-Datenverarbeitungsvorrichtung (1) Informationen über den Zustand des Handarbeitsplatzes (3) an die Abseits-Datenverarbeitungsvorrichtung (1) zu übermitteln,
ii) einer Steuerdaten-Eingangsschnittstelle (343), die eingerichtet ist, über eine Steuerdaten-Ausgangsschnittstelle (13) der Abseits-Datenverarbeitungsvorrichtung (1) Fertigungsinformation von der Abseits-Datenverarbeitungsvorrichtung (1) zu beziehen,
iii) einem Handarbeitsplatz-Datenverarbeitungsvorrichtungs-Datenspeicher (341) auf dem mindestens ein Fertigungsstättenprogramm gespeichert ist,
iv) einer Benutzungsschnittstelle (36), die eingerichtet ist, Daten von der Handarbeitsplatz-Datenverarbeitungsvorrichtung (34) an einen Benutzer auszugeben oder Dateneingaben des Benutzers in die Handarbeitsplatz-Datenverarbeitungsvorrichtung zu erlauben,
c) Mindestens einen Sensor (35), der geeignet ist, das Bauteil (32) zu erfassen und Bauteil-Zustandsdaten an die Handarbeitsplatz-Datenverarbeitungsvorrichtung (34) zu übermitteln,
d) wobei das mindestens eine Fertigungsstättenprogramm dazu eingerichtet ist, die Handarbeitsplatz-Datenverarbeitungsvorrichtung so zu steuern,
i) Information zu Teilarbeitsschritten über die Benutzungsschnittstelle an den Benutzer zu übermitteln, und
ii) die Bauteil-Zustandsdaten über die Zustandsdaten-Ausgangsschnittstelle an die Zustandsdaten-Eingangsschnittstelle der Abseits-Datenverarbeitungsvorrichtung (1) so zu übermitteln, dass die Abseits-Datenverarbeitungsvorrichtung (1) den Fertigungsfortschritt des Bauteils erfassen kann,
wobei die Handarbeitsplatz-Datenverarbeitungsvorrichtung (34) so eingerichtet ist, dass Werkzeugdaten von der Handarbeitsplatzeinheit (3) an die Abseits-Datenverarbeitungsvorrichtung (1) übermittelt werden können, wobei die Werkzeugdaten Dritten zur Verfügung gestellt werden können,
wobei die Abseits-Datenverarbeitungsvorrichtung (1) aufweist:
a) eine Auftragsdaten-Eingangsschnittstelle (14) die eingerichtet ist, Kundenaufträge zur Fertigung eines Bauteils (32) an der Handarbeitsplatzeinheit (3) zu empfangen,
b) die Zustandsdaten-Eingangsschnittstelle (12), die eingerichtet ist, über die Zustandsdaten-Ausgangsschnittstelle (342) der Handarbeitsplatzeinheit (3) Informationen über den Zustand des Handarbeitsplatzes zu empfangen,
c) die Steuerdaten-Ausgangsschnittstelle (13), die eingerichtet ist, über die Steuerdaten-Eingangsschnittstelle (343) der Handarbeitsplatzeinheit (3) Fertigungsinformation an die Handarbeitsplatzeinheit (3) zu übermitteln, und
d) einen Abseits-Datenspeicher (11) zum Speichern mindestens eines Fertigungssteuerprogramms,
e) wobei das mindestens eine Fertigungssteuerprogramm dazu eingerichtet ist, die Abseits-Datenverarbeitungsvorrichtung (1) so zu steuern,
i) aus einem über die Auftragsdaten-Eingangsschnittstelle (14) eingegangenen Auftrag Teilarbeitsschritte zur Fertigung eines Bauteils (32) zu ermitteln,
ii) Informationen mit Bezug zu den Teilarbeitsschritten über die Steuerdaten-Ausgangsschnittstelle (13) und die Steuerdaten-Eingangsschnittstelle (343) der Handarbeitsplatzeinheit (8) an die Handarbeitsplatzeinheit zu übermitteln, und
iii) Bauteil-Zustandsdaten über die Zustandsdaten-Ausgangsschnittstelle (342) der Handarbeitsplatzeinheit (3) und die Zustandsdaten-Eingangsschnittstelle (12) so zu empfangen, dass die Abseits-Datenverarbeitungsvorrichtung (1) den Fertigungsfortschritt des Bauteils (32) erfassen kann,
wobei die Abseits-Datenverarbeitungsvorrichtung dazu eingerichtet ist, in Verbindung mit mehreren Fertigungsstätten betrieben zu werden, wobei die Abseits-Datenverarbeitungsvorrichtung zumindest eine weitere Schnittstelle für eine weitere Fertigungsstätte aufweist, die örtlich oder organisatorisch von einer ersten Fertigungsstätte getrennt ist,
**dadurch gekennzeichnet, dass** die Handarbeitsplatz-Datenverarbeitungsvorrichtung (34) so eingerichtet ist, dass die zur Verfügung gestellten Daten von der Fertigungsstätte nach unterschiedlichen Geheimhaltungsstufen gekennzeichnet werden.

2. Handarbeitsplatzbetreibungssystem nach Anspruch 1, wobei das Fertigungsstättenprogramm modular aufgebaut ist, so dass für einen oder mehrere Arbeitsprozesse ein Prozess-Fertigungsstättenprogrammmodul unabhängig von anderen Prozess-Fertigungsstättenprogrammmodulen erstellt oder ausgetauscht werden kann.

3. Handarbeitsplatzbetreibungssystem nach einem der vorhergehenden Ansprüche, wobei die Handarbeitsplatz-Datenverarbeitungsvorrichtung (34) so eingerichtet ist, dass Daten, insbesondere Fertigungsstättenprogrammmodule individuell für unterschiedliche Werkzeuge, Arbeitsschritte oder Bauteile, insbesondere von Drittanbietern wie Werkzeugherstellern, Materiallieferanten, Dienstleistern und Auftraggebern, erstellt, gepflegt oder ausgetauscht werden können.

4. Handarbeitsplatzbetreibungssystem nach einem der vorhergehenden Ansprüche, wobei die Handarbeitsplatz-Datenverarbeitungsvorrichtung (34) so eingerichtet ist, dass Daten von den benutzten Werkzeugen, über die Abseits-Datenverarbeitungsvorrichtung, Drittanbietern, insbesondere Werkzeugherstellern, Materiallieferanten, Dienstleistern und Auftraggebern, zur Verfügung gestellt werden können.

5. Handarbeitsplatzbetreibungssystem nach einem der vorhergehenden Ansprüche, wobei die Abseits-Datenverarbeitungsvorrichtung (1) mindestens eine Dienstleister-Schnittstelle für mindestens eine Datenverbindung von der Abseits-Datenverarbeitungsvorrichtung (1) zu mindestens einem Dienstleister aufweist.

6. Handarbeitsplatzbetreibungssystem nach einem der vorhergehenden Ansprüche, wobei das Fertigungssteuerprogramm ausgelegt ist, die Abseits-Datenverarbeitungsvorrichtung (1) so zu steuern, dass die Daten von Auftraggeber, Werkzeughersteller, Fertigungsstätte(n) und Dienstleister nach den Vorgaben der Bereitstellung der Datenerzeuger soweit voneinander getrennt sind, so dass die einzelnen Drittanbieter nur Zugriff auf Daten bekommen, die ihnen von dem Datenerzeuger freigegeben worden sind.

7. Handarbeitsplatzbereitstellungsverfahren, das die Schritte aufweist:
a) Bereitstellen eines Handarbeitsplatzbetreibungssystem mit einer Abseits-Datenverarbeitungsvorrichtung (1) und einer Handarbeitsplatzeinheit (3) nach einem der vorhergehenden Ansprüche,
c) Erstellen mindestens eines arbeitsprozess-individuellen Fertigungssteuerprogrammmoduls,
d) Speichern des arbeitsprozess-individuellen Fertigungssteuerprogrammmoduls im Abseits-Datenspeicher (11),
e) Erstellen mindestens eines arbeitsprozess-individuellen Fertigungsstättenprogrammmoduls,
f) Speichern des arbeitsprozess-individuellen Fertigungsstättenprogrammmoduls im Handarbeitsplatz-Datenverarbeitungsvorrichtungs-Datenspeicher (341).

8. Nutzung eines Handarbeitsplatzbetreibungssystems nach einem der vorhergehenden Ansprüche 1-6zur Bereitstellung von Fertigungsstättenprogrammmodulen und Fertigungssteuerprogrammmodulen, die individuell für unterschiedliche Werkzeuge, Arbeitsschritte oder Bauteile insbesondere von Drittanbietern wie Werkzeugherstellern und Auftraggebern erstellt werden.

9. Nutzung eines Handarbeitsplatzbetreibungssystem nach einem der Ansprüche 1 - 6 zur Bereitstellung von Daten der Nutzung und eines Status des am Handarbeitsplatz verwendeten Werkzeugs und insbesondere zur Nutzung der Daten für eine verbesserte Werkzeugnutzung, dessen Wartung oder Weiterentwicklung.

## Claims

1. A system for running a manual workplace, the system comprising:
- a manual workplace unit (3) of a production plant of a production plant owner, and
- an off-site data processing device (1)
wherein the manual workplace unit (3) comprises:
a) a manual workplace (31) for carrying out production work on a component (32), the work able to be carried out at least partially by hand,
b) a manual workplace data processing device (34) comprising:
i) a state data output interface (342) configured to transmit information about the state of the manual workplace (3) to the off-site data processing device (1) via a state data input interface (12) of the off-site data processing device (1),
ii) a control data input interface (343) configured to receive production information from the off-site data processing device (1) via a control data output interface (13) of the off-site data processing device (1),
iii) a manual workplace data processing device data store (341) in which at least one production plant program is stored,
iv) a user interface (36) configured to output data from the manual workplace data processing device (34) to a user or to allow data inputs from the user to the manual workplace data processing device,
c) at least one sensor (35) suitable for detecting the component (32) and transmitting component state data to the manual workplace data processing device (34),
d) wherein at least one production plant program is configured to control the manual workplace data processing device so as
i) to transmit to the user, via the user interface, information concerning partial work steps, and
ii) to transmit the component state data to the state data input interface of the off-site data processing device (1) via the state data output interface in such a way that the off-site data processing device (1) can detect the progress in the production of the component,
wherein the manual workplace data processing device (34) is configured such that tool data from the manual workplace unit (3) can be transmitted to the off-site data processing device (1), wherein the tool data can be made available to third parties,
wherein the off-site data processing device (1) comprises:
a) an order data input interface (14) configured to receive customer orders for the production of a component (32) at the manual workplace unit (3),
b) the state data input interface (12) which is configured to receive information concerning the state of the manual workplace unit via the state data output interface (342) of the manual workplace unit (3),
c) the control data output interface (13) which is configured to transmit production information to the manual workplace unit (3) via the control data input interface (343) of the manual workplace unit (3), and
d) an off-site data store (11) for storing at least one production control program,
e) wherein the at least one production control program is configured to control the off-site data processing device (1) so as
i) to ascertain, from an order received via the order data input interface (14), partial work steps for producing a component (32),
ii) to transmit information concerning the partial work steps to the manual workplace unit (8) via the control data output interface (13) and the control data input interface (343) of the manual workplace unit, and
iii) to receive component state data via the state data output interface (342) of the manual workplace unit (3) and the state data input interface (12) so as to allow the off-site data processing device (1) to detect the progress in the production of the component (32),
wherein the off-site data processing device is configured to be operated in connection with a plurality of production plants, the off-site data processing device comprising at least one further interface for a further production plant which is physically or organizationally separated from a first production plant,
**characterized in that** the manual workplace data processing device (34) is configured such that the data which are made available are identified by the production plant according to various secrecy steps.

2. The system for running a manual workplace according to claim 1, wherein the production plant program is modularly designed so that a process-related production plant program module can be created or exchanged for one or more work processes independently of other process-related production plant program modules.

3. The system for running a manual workplace according to one of the preceding claims, wherein the manual workplace data processing device (34) is configured such that data, in particular production plant program modules, can be created, maintained or exchanged individually for various tools, work steps or components, in particular those of third-party vendors such as tool manufacturers, material suppliers, service providers and clients.

4. The system for running a manual workplace according to one of the preceding claims, wherein the manual workplace data processing device (34) is configured such that data from the tools being used can be made available to third-party vendors, in particular tool manufacturers, material suppliers, service providers and clients, via the off-site data processing device.

5. The system for running a manual workplace according to one of the preceding claims, wherein the off-site data processing device (1) comprises at least one service provider interface for at least one data connection of the off-site data processing device (1) to at least one service provider.

6. The system for running a manual workplace according to one of the preceding claims, wherein the production control program is designed to control the off-site data processing device (1) such that the data from the client, tool manufacturer, production plant(s) and service providers are separated from one another in accordance with the data preparation specifications of the data producers to a degree sufficient to only give individual third-party vendors access to data that had been released to them in each case by the data producer.

7. A method for running a manual workplace, the method comprising the steps of:
a) providing a system for running a manual workplace, the system comprising an off-site data processing device (1) and a manual workplace unit (3) according to one of the preceding claims,
c) generating at least one production control program module which is specific to a particular work process,
d) storing the production control program module that is specific to a particular work process in the off-site data store (11),
e) generating at least one production plant program module which is specific to a particular work process,
f) storing the production plant program module that is specific to a particular work process in the manual workplace data processing device data store (341).

8. A use of a system for running a manual workplace according to one of the preceding claims 1-6 for the purposes of providing production plant program modules and production control program modules which are created individually for different tools, work steps or components, in particular those of third-party vendors such as tool manufacturers and clients.

9. A use of a system for running a manual workplace according to one of the preceding claims 1-6 for the purposes of providing data concerning the use and for providing a status of the tool used at the manual workplace, and in particular for using the data to improve tool use, tool maintenance or the further development thereof.

## Revendications

1. Système permettant le fonctionnement d'un poste de travail manuel, comprenant :
- un ensemble poste de travail manuel (3) d'un site de fabrication d'un opérateur de site de fabrication, et
- un dispositif externe de traitement de données (1)
dans lequel l'ensemble poste de travail manuel (3) comprend :
a) un poste de travail manuel (31) pour la réalisation de travaux de fabrication sur une pièce (32), lesquels sont effectués au moins partiellement à la main,
b) un dispositif de traitement de données du poste de travail manuel (34) avec :
i) une interface de sortie de données d'état (342), configurée pour transmettre des informations sur l'état du poste de travail manuel (3) au dispositif externe de traitement de données (1) par l'intermédiaire d'une interface d'entrée de données d'état (12) du dispositif externe de traitement de données (1),
ii) une interface d'entrée de données de contrôle (343), configurée pour capter des informations de fabrication à partir du dispositif externe de traitement de données (1) par l'intermédiaire d'une interface de sortie de données de contrôle (13) du dispositif externe de traitement de données (1),
iii) une mémoire de données du dispositif de traitement de données du poste de travail manuel (341) sur laquelle est sauvegardé au moins un programme de site de fabrication,
iv) une interface utilisateur (36), configurée pour émettre des données depuis le dispositif de traitement de données du poste de travail manuel (34) vers un utilisateur, ou permettre l'insertion de données d'utilisateur dans le dispositif de traitement de données du poste de travail manuel,
c) au moins un capteur (35) en mesure de détecter la pièce (32) et transmettre des données d'état de la pièce au dispositif de traitement de données du poste de travail manuel (34),
d) où au moins un programme de site de fabrication est configuré dans le but de contrôler ainsi le dispositif de traitement de données du poste de travail manuel,
i) transmettre des informations à l'utilisateur concernant les étapes partielles de travail par l'intermédiaire de l'interface utilisateur, et
ii) transmettre les données d'état de la pièce par l'intermédiaire de l'interface de sortie de données d'état à l'interface d'entrée de données d'état du dispositif externe de traitement de données (1), de sorte que le dispositif externe de traitement de données (1) peut détecter les étapes de fabrication de la pièce, où le dispositif de traitement de données du poste de travail manuel (34) est configuré de sorte que des données d'outil peuvent être transmises à partir de l'ensemble poste de travail manuel (3) au dispositif externe de traitement de données (1), les données d'outil pouvant être mises à disposition de tiers,
où le dispositif externe de traitement de données (1) comprend :
a) une interface d'entrée de données de commande (14), configurée pour recevoir des commandes de clients pour la fabrication d'une pièce (32) sur l'ensemble poste de travail manuel (3),
b) l'interface d'entrée de données d'état (12), configurée pour recevoir des informations sur l'état du poste de travail manuel par l'intermédiaire de l'interface de sortie de données d'état (342) de l'ensemble poste de travail manuel (3),
c) l'interface de sortie de données de contrôle (13), configurée pour transmettre des informations de fabrication à l'ensemble poste de travail manuel (3) par l'intermédiaire de l'interface d'entrée de données de contrôle (343) de l'ensemble poste de travail manuel (3), et
d) une mémoire de données externe (11) pour la sauvegarde d'au moins un programme de contrôle de fabrication,
e) où au moins un programme de contrôle de fabrication est configuré pour contrôler ainsi le dispositif externe de traitement de données (1),
i) déterminer les étapes partielles de travail pour la fabrication d'une pièce (32), à partir d'une commande reçue par l'intermédiaire de l'interface d'entrée de données de commande (14),
ii) transmettre à l'ensemble poste de travail manuel des informations relatives aux étapes partielles de travail par l'intermédiaire de l'interface de sortie de données de contrôle (13) et de l'interface d'entrée de données de contrôle (343) de l'ensemble poste de travail manuel (8), et
iii) recevoir les données d'état de la pièce par l'intermédiaire de l'interface de sortie de données d'état (342) de l'ensemble poste de travail manuel (3) et de l'interface d'entrée de données d'état (12), de sorte que le dispositif externe de traitement de données (1) peut détecter la progression de la fabrication de la pièce (32),
où le dispositif externe de traitement de données est configuré pour être utilisé en connexion avec plusieurs sites de fabrication, le dispositif externe de traitement de données comprenant au moins une autre interface pour un autre site de fabrication, lequel est séparé du premier site de fabrication du point de vue géographique ou organisationnel,
**caractérisé en ce que** le dispositif de traitement de données du poste de travail manuel (34) est configuré de sorte que les données à disposition provenant du site de fabrication sont marquées selon différents niveaux de confidentialité.

2. Système permettant le fonctionnement d'un poste de travail manuel selon la revendication 1, où le programme de site de fabrication est développé de manière modulaire, de sorte que pour un ou plusieurs processus de travail, un module de programme de processus pour sites de fabrication peut être créé ou échangé indépendamment d'autres modules de programme de processus pour sites de fabrication.

3. Système permettant le fonctionnement d'un poste de travail manuel selon l'une des revendications précédentes, où le dispositif de traitement de données du poste de travail manuel (34) est configuré de sorte que des données, notamment des modules de programme de site de fabrication, peuvent être créées, traitées ou échangées individuellement pour différents outils, étapes de travail ou pièces, notamment par des prestataires tiers tels que des fabricants d'outils, fournisseurs de matériaux, prestataires de services et donneurs d'ordre.

4. Système permettant le fonctionnement d'un poste de travail manuel selon l'une des revendications précédentes, où le dispositif de traitement de données du poste de travail manuel (34) est configuré de sorte que des données des outils utilisés peuvent être mises à disposition, par l'intermédiaire du dispositif externe de traitement de données, à des prestataires tiers notamment des fabricants d'outils, fournisseurs de matériaux, prestataires de services et donneurs d'ordre.

5. Système permettant le fonctionnement d'un poste de travail manuel selon l'une des revendications précédentes, où le dispositif externe de traitement de données (1) comprend au moins une interface prestataire pour au moins une connexion de données du dispositif externe de traitement de données (1) vers au moins un prestataire de services.

6. Système permettant le fonctionnement d'un poste de travail manuel selon l'une des revendications précédentes, où le programme de contrôle de fabrication est conçu pour contrôler le dispositif de traitement de données (1), de telle sorte que les données du donneur d'ordre, fabricant d'outils, du ou des site(s) de fabrication et du prestataire de service soient distinctes les unes des autres selon les spécifications de mise à disposition des éditeurs de données, de sorte que chacun des prestataires tiers n'ait accès qu'aux données qui leur ont été autorisées par l'éditeur de données.

7. Procédé de préparation d'un poste de travail manuel, comprenant les étapes suivantes
a) Mettre en place un système permettant le fonctionnement d'un poste de travail manuel avec un dispositif externe de traitement de données (1) et un ensemble poste de travail manuel (3) selon l'une des revendications précédentes,
c) Créer au moins un module de programme de contrôle de fabrication spécifique au processus de travail,
d) Sauvegarder le module de programme de contrôle de fabrication spécifique au processus de travail dans la mémoire de données externe (11),
e) Créer au moins un module de programme de site de fabrication spécifique au processus de travail,
f) Sauvegarder le module de programme de site de fabrication spécifique au processus de travail dans la mémoire de données du dispositif de traitement de données du poste de travail manuel (341).

8. Utilisation d'un système permettant le fonctionnement d'un poste de travail manuel selon l'une des revendications 1-6 précédentes, en vue de la mise à disposition de modules de programme de site de fabrication et de modules de programme de contrôle de fabrication, créés spécifiquement pour différents outils, étapes de travail ou pièces, notamment par des prestataires tiers tels que des fabricants d'outils et donneurs d'ordre.

9. Utilisation d'un système permettant le fonctionnement d'un poste de travail manuel selon l'une des revendications 1-6, en vue de la mise à disposition de données d'utilisation et d'un état de l'outil utilisé sur le poste de travail manuel et notamment en vue de l'utilisation des données pour améliorer l'utilisation de l'outil, sa maintenance ou son développement.
